# EUROPEAN PATENT APPLICATION

(11) **EP 2 808 592 A1**
(43) Date of publication of application: **03.12.2014**
(21) Application number: 14162603.6
(22) Date of filing: 31.03.2014
(51) Int. Cl.: F16L 37/14

(54) **Swivel adaptor**

(30) Priority: 29.05.2013 PL 40414113
(71) Applicant: Bomar S.A., 41-400 Myslowice (PL)
(72) Inventor: Niemczyk, Piotr, 43-230 Goczalkowice Zdrój (PL); Niemczyk, Pawel, 43-600 Jaworzno (PL); Kaczmarek, Krzysztof, 41-215 Sosnowiec (PL)
(74) Representative: Korga, Leokadia

(57) **Abstract**

The subject of the invention is a swivel adaptor for connecting hydraulic systems providing tightness and reliability of the connection and it is designed for installations of gas and fluids flow. According to the invention the characteristic feature of the swivel adaptor with female fitting locked with a wire is that in the female fitting (1), which has a groove (2) made on the inside circumference and a hole (3) made tangentially to it, there is a thread coupling (4) assembled, on the circumference of which a groove (5) is also made while the hole (3) for inserting the wire is in the groove's axial (5).

## Description

The subject of the invention is a swivel adaptor for connecting hydraulic systems providing tightness and reliability of the connection and it is designed for installations of gas and fluids flow.

The patent description PL. 205239 portrays an adaptor for hoses of high tensile steel braids, that has a clamping ring made of at least two parts girding the hose in the form of a gripping jaw having the inside contours clamping the steel braided hose pulled on the ferrule on the base of profiled connection. The invention for high tensile steel braided hoses having varied pitch anticipates a solution whereby the spiral girds the hose with a few coils in the ferrule area all the way to the end of the clamping ring and it is crimped to prevent the displacement of the spiral in the axial direction.

The utility model description no. Ru 64182 portrays an adapter with fit conical pipe coupling units of which characteristic feature is that flexible sealing ring is planted in the open corner of the inner cone in the female fitting and it is pressed by the phase of the outer cone in the male fitting. Between the bases and the tops of the adjacent cones there are slits. The diameter of the chamber holding the flexible sealing ring should be 1,1 to 1,6 times bigger than the diameter of the sealing ring.

The basic aim of this invention is to construct a swivel adaptor for use in the devices with small amount of space.

According to the invention the characteristic feature of the swivel adaptor with female fitting locked with a staple is that in the female fitting, which has a groove made on the inside circumference and a hole made tangentially to it, there is a thread coupling assembled, on the circumference of which a groove is also made while the hole for inserting the wire is in the groove's axial.

The basic advantage of the invention is constructing a swivel adaptor for connecting hoses in hydraulic systems. Owing to the fact that the sealing part was transferred to the thread module the possibility of the female fitting swivel was achieved along with inserting the staple in any requested position of the fitting. The swivel adaptor considerably facilitates connecting elements in the devices with small amount of space. The solution is also very important in case the connection requires the element to rotate on one's axis. The solution provides at the same time the connection is resistant for the dynamic pressure changes in the hose.

The subject of the invention is presented as an exemplary model in the following:

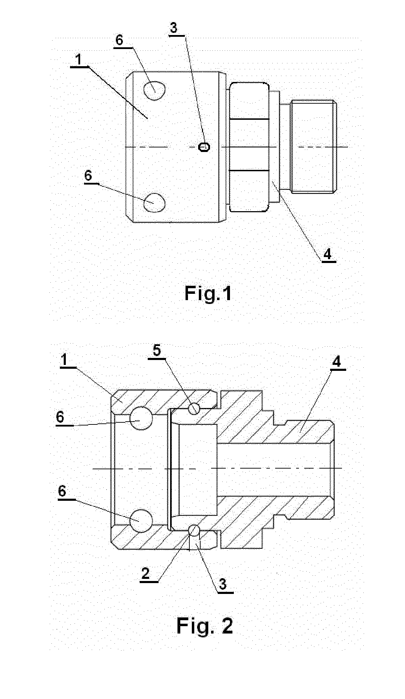

Fig.1 presents the view of the swivel adaptor
Fig. 2 presents the cross section of the swivel adaptor

The following example of the adaptor production does not limit the adaptor application possibilities.

### The example of the adaptor production

A swivel adaptor with female fitting 1 locked with a staple and with thread coupling 4. In the female fitting 1 a groove 2 made on the inside circumference and a hole 3 made tangentially to it made for inserting the wire. In the female fitting 1 there is a thread coupling assembled 4, that is able to rotate against female fitting 1. There is a groove 5 made on the circumference of the thread coupling 4. The hole 3 is in the axial of the groove 5. On the circumference of the female fitting 1 there are holes 6 made for assembling the hose with crimped ferrule and the staple made in conformity with PN-G-3200-2011 standard.

## Claims

1. The swivel adaptor with female fitting locked with a staple wherein within the female fitting(1), which has a groove (2) made on the inside circumference and a hole (3) made tangentially to it, there is a thread coupling (4) assembled, on the circumference of which a groove (5) is also made while the hole (3) for inserting the wire is in the axial of the groove (5).
